# EUROPÄISCHE PATENTSCHRIFT

(11) **EP 0 682 398 B1**
(45) Veröffentlichungstag und Bekanntmachung des Hinweises auf die Patenterteilung: **31.01.1996**
(21) Anmeldenummer: 94107424.7
(22) Anmeldetag: 13.05.1994
(51) Int. Cl.: H02K 7/14, H02K 7/08, H02K 5/14

(54) **Motor-Pumpen-Aggregat, insbesondere für einen ABS-Antrieb**
Motor-pump unit, in particular for an ABS-drive
Groupe moto-pompe, en particulier pour la commande d'un ABS

(43) Veröffentlichungstag der Anmeldung: 15.11.1995
(73) Patentinhaber: SIEMENS AKTIENGESELLSCHAFT, D-80333 München (DE)
(72) Erfinder: Deynet, Rolf, Dipl.-Ing., D-97074 Würzburg (DE); Seuffert, Werner, D-97493 Bergrheinfeld (DE)

(56) Entgegenhaltungen:
- EP-A- 0 472 746
- CH-A- 596 697
- DE-A- 4 235 962
- DE-U- 8 603 981
- US-A- 5 015 897

## Beschreibung

Die Erfindung bezieht sich auf ein Motor-Pumpen-Aggregat, insbesondere für einen ABS-Antrieb, gemäß Patentanspruch 1.

Durch die DE-A1-42 35 962 ist ein Elektromotor zum Antrieb einer axial angeflanschten Hydraulikpumpe mit einer feuchtigkeitsdichten stirnseitigen Anlage zwischen einem topfförmigen Motorgehäuse eines Kommutatormotors einerseits und einem Pumpengehäuse andererseits bekannt, wobei zur Abdichtung eine radial innerhalb des Motorgehäuses angeordnete Kunststoff-Bürstentragplatte benutzt wird, die mit einstückig angeformten Dichtlippen gegen die Stirnfläche des Pumpengehäuses bzw. radial innen gegen den Topfrand des Motorgehäuses anliegt, derart daß radial außen der Topfrand des Motorgehäuses unmittelbar die Stirnfläche des Pumpengehäuses berührt. Das Rotorwellenende des Kommutatormotors ragt in das Pumpengehäuse und ist A-seitig über ein im Festsitz aufgestecktes Rotorwellenlager unmittelbar in einer Lageraufnahme des Pumpengehäuses zu diesem zentriert gelagert; am äußersten Ende des aus der Lageraufnahme herausragenden Rotorwellenendes ist ein Exzenter einstückig angeformt. Ein ähnlicher Elektromotor wird auch bereits durch die EP-A1-0 633 645, die unter Art.54(3) fällt, vorgeschlagen.

Gemäß Aufgabe vorliegender Erfindung soll bei gewährleisteter Feuchtigkeitsdichtigkeit und einfacher Fertigungs- und Montagetechnik die axiale Kompaktheit des Pumpenaggregates weiter verbessert werden. Die Lösung dieser Aufgabe gelingt durch die Lehre des Patentanspruchs 1; vorteilhafte Ausgestaltungen der Erfindung sind jeweils Gegenstand der Unteransprüche.

Die erfindungsgemäße Ausführung eines Pumpenaggregats erlaubt einerseits bei gewährleisteter axialer Lagerabstützung den Wegfall eines gesonderten A-seitigen Lagerschildes an der offenen Stirnseite des topfförmigen Motorgehäuses und damit eine wesentliche Verkürzung der axialen Baulänge und andererseits durch die dichtende Zwischenlage der A-seitigen Bürstenhalterung in Verbindung mit dem durch seine Topfform geschlossenen Motorgehäuse eine sichere Feuchtigkeitsabdichtung sowie eine einfache Fertigungs- und insbesondere Montagemöglichkeit dadurch, daß der Kommutatormotor als vormontierbare Bauteileinheit mit axial an der offenen Motorgehäuseseite befestigter Bürstenhalterung ausgebildet und mit dem axial außen vor der Bürstenhalterung auf das Rotorwellenende im Festsitz aufgesetzten A-seitigen Lager zentriert zu dem Pumpengehäuse in dessen Lageraufnahme axial einsteckbar und dann an diesem in entsprechender zentrierter Lage montierbar ist; dabei ist das Motorgehäuse in vorteilhafter Weise über die an diesem befestigte, insbesondere axial verrastete, Bürstenhalterung an dem A-seitigen Lager mittelbar bzw. unmittelbar radial derart abgestützt, daß nach dem zentrierten Einstecken der Motor-Bauteileinheit in die Lageraufnahme des Pumpengehäuses das Motorgehäuse zu der Lageraufnahme radial ausgerichtet und in dieser radial ausgerichteten Stellung, beispielsweise über eine Langloch- oder andere zum Einstellen spielbehaftete Aufnahme, an der Stirnseite des Pumpengehäuses befestigbar, insbesondere festschraubbar, ist.

Die radiale Zentrierung des Motorgehäuses zur Lageraufnahme im Pumpengehäuse kann unmittelbar zu dem A-seitigen Lager z.B. dadurch erfolgen, daß die Bürstenhalterung an ihrem radial inneren Ende das A-seitige Lager motorseitig umfaßt oder in besonders vorteilhafter Weise mittelbar dadurch erfolgen, daß nach einer Ausgestaltung der Erfindung die Bürstenhalterung ohne kraft- und/oder formschlüssiger Verbindung zu dem A-seitigen Lager radial an dem Rotorwellenende anliegt, das über das A-seitige Lager in der Lageraufnahme des Pumpengehäuses radial abgestützt ist. Dabei ist die Bürstenhalterung an ihrem radial inneren Ende mit einer in insbesondere für eine Abdichtung gegenüber Pumpenleckflüssigkeit vorteilhaften und reibungsarmen Anlage an dem Umfang des Rotorwellenendes mit einem schneidenförmigen Anlagerand versehen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: einen axialen Teil-Längsschnitt durch ein Motor-Pumpen-Aggregats für ein Kraftfahrzeug-Antiblockier-Bremssystem;
- FIG 2: einen weiteren vergrößerten Ausschnitt aus FIG 1 im Bereich der Befestigung der A-seitigen Bürstenhalterung im Motorgehäuse;
- FIG 3: einen ersten vergrößerten Teilausschnitt aus FIG 1 im Entlüftungsbereich der gegenseitigen Anlage von Motorgehäuse einerseits und Pumpengehäuse andererseits;
- FIG 4: einen weiteren vergrößerten Ausschnitt aus FIG 1 im Bereich der A-seitigen Lagerung der Rotorwelle;
- FIG 5: einen weiteren vergrößerten Ausschnitt im Bereich des Exzenter-Wellenendes der Rotorwelle.

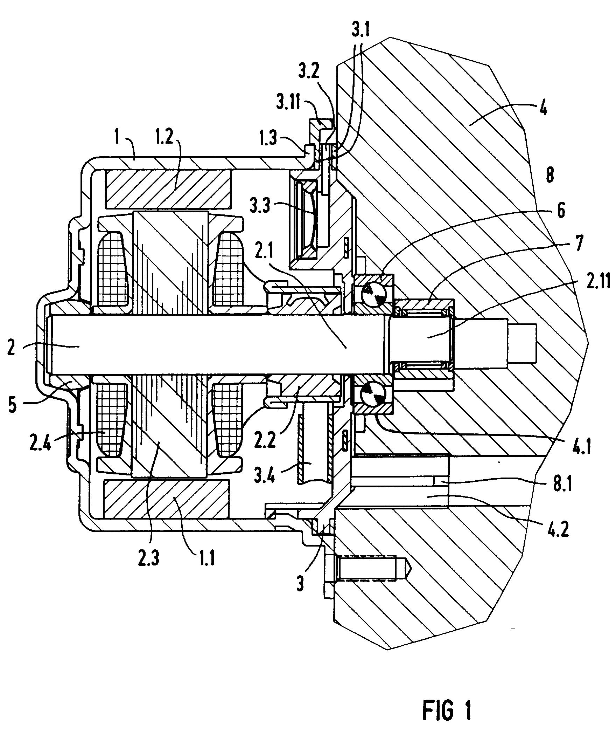

FIG 1 zeigt in einem axialen Teil-Längsschnitt ein Motor-Pumpen-Aggregat mit einem topfförmigen Motorgehäuse 1 eines Kommutatormotors, das mit seinem Topfrand 1.3 stirnseitig dichtend gegen ein Pumpengehäuse 4 anliegt und mit diesem verschraubbar ist. Am Innenumfang des Motorgehäuses 1 sind zur magnetischen Erregung Erregermagnete 1.2;1.3 befestigt. An dem Topfrand 1.3 des Motorgehäuses 1 liegt eine vorzugsweise aus Kunststoff gespritzte und insbesondere im wesentlichen plattenförmig ausgebildete Bürstenhalterung 3 an, die zumindest randseitig an beiden Stirnseiten mit einer vorzugsweise elastischen Dichtungsauflage 3.1 derart versehen ist, daß beim Anschrauben des Motorgehäuses 1 gegen die Stirnseite des Pumpengehäuses 4 beide Bauteile feuchtigkeitsdicht gegeneinander verschlossen sind.

Die einen Kommutator 2.2 sowie ein Rotorblechpaktet 2.3 mit einer Rotorwicklung 2.4 aufnehmende Rotorwelle 2 ist an ihrem linken Ende in einem als B-seitiges Rotorwellenlager 5 vorgesehenen Kalottenlager und an ihrem rechten Ende in einem als A-seitiges Rotorwellenlager 6 vorgesehenen Kugellager gelagert. Das auf das rechte Rotorwellenende 2.1 der Rotorwelle 2 im Preßsitz aufgesteckte A-seitige Rotorwellenlager 6 wird unmittelbar radial zentriert in einer Lageraufnahme 4.1 des Pumpengehäuses 4 und in Richtung der B-Seite axial gegen die Bürstenhalterung 3 durch Anlage mit seinem Lageraußenring abgestützt.

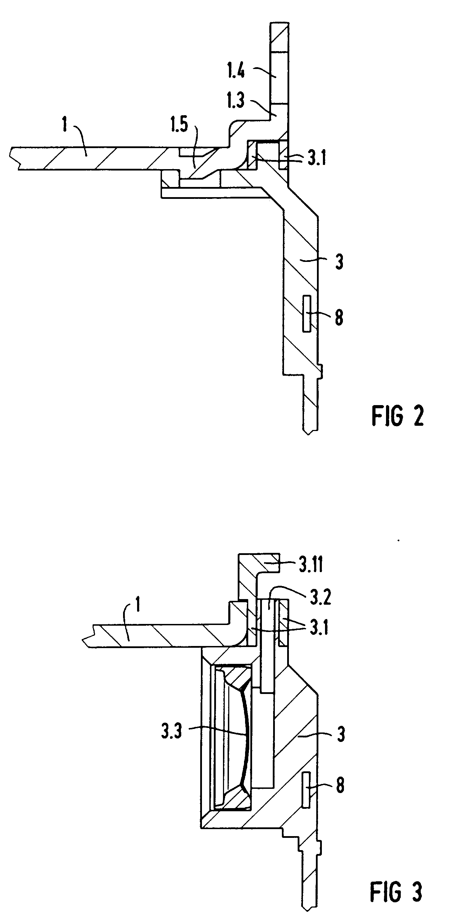

Der Kommutatormotor ist in vorteilhafter Weise als vormontierbare Bauteileinheit mit axial an der offenen Motorgehäuseseite befestigter, insbesondere - wie aus FIG 3 ersichtlich - mittels über den Umfang verteilter Rastmittel 1.5 verrasteter, Bürstenhalterung 3 ausgebildet und mit dem axial außen vor der Bürstenhalterung 3 auf das Rotorwellenende 2.1 im Festsitz aufgesetzten A-seitigen Rotorwellenlager 6 zentriert zu dem Pumpengehäuse 4 in dessen Lageraufnahme 4.1 axial eingesteckt. Das A-seitige, als Kugellager ausgebildete Rotorwellenlager 6 stützt sich axial mit seinem Außenring einerseits gegen eine Lagerschulter des Pumpengehäuses 4 und andererseits gegen eine Anlageschulter 3.6 der Bürstenhalterung 3 ab.

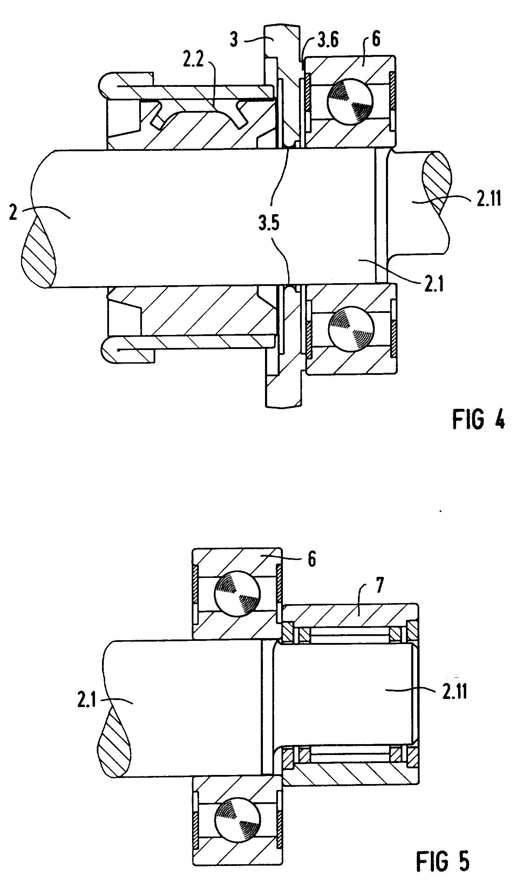

Die vormontierte Motor-Bauteileinheit wird über ihre Bürstenhalterung 3 an dem A-seitigen Rotorwellenlager 6 und damit der Lageraufnahme 4.1 des Pumpengehäuses 4 mittelbar bzw. unmittelbar radial abgestützt und kann somit insgesamt bei einer axialen Steckmontage zwischen Motorgehäuse 1 einerseits und Pumpengehäuse 4 andererseits vor der endgültigen gegenseitigen Verflanschung zentriert ausgerichtet werden; beim Ausführungsbeispiel nach FIG 1 erfolgt eine mittelbare Zentrierung des Pumpengehäuses 4 über die Bürstenhalterung 3 und die Rotorwelle 2, an der die Bürstenhalterung 3 - wie insbesondere aus FIG 4 ersichtlich - mit einem schneidenförmigen Anlagerand 3.5 anliegt; durch den schneidenförmigen Anlagerand 3.5 wird einerseits ein geringer Reibungswiderstand und andererseits eine gute Abdichtung derart erreicht, daß eventuell austretende Pumpen-Leckflüssigkeit nicht in das Innere des Motorgehäuses 1 gelangen kann.

In vorteilhafter Weise sind die gegenseitigen Schaltverbindungen zwischen den von der Bürstenhalterung 3 aufzunehmenden Bauteilen bzw. Kontaktierungen in Form eines in die Bürstenhalterung 3 derart eingegossenen Stanzgitters 8 ausgeführt, daß insbesondere an den dichtenden Anlagerändern zwischen dem Motorgehäuse 1 einerseits und dem Pumpengehäuse 4 andererseits die Stanzgitter-Verbindungen beidseitig in den Kunststoffgrundkörper der Bürstenhalterung 3 eingespritzt sind. Wie insbesondere aus FIG 1 ersichtlich, ist zum Außenanschluß der Schaltverbindungen der Bürstenhalterung 3 an das Stanzgitter 8 eine axial vorstehende Steck-Kontaktierung 8.1 angeformt, die aus der Bürstenhalterung 3 axial hervorstehend in eine, vorzugsweise axial verlaufende Kontaktierungsöffnung 4.2 im Pumpengehäuse 4 derart hineinragt, daß eine Gegenkontaktierung von einer auf der motorabgewandten Seite des Pumpengehäuses 4 stirnseitig anliegenden, hier nicht dargestellten Steuereinheit erfolgen kann.

Wie insbesondere aus FIG 2 ersichtlich, ist die dichtend zwischen den voreinanderliegenden Teilen des Motorgehäuses 1 einerseits und des Pumpengehäuses 4 andererseits liegende Bürstenhalterung 3 mit einem von dem Inneren des Motorgehäuses 1 nach außen führenden Entlüftungskanal 3.2 versehen, der vorzugsweise radial verlaufend in die Bürstenhalterung 3 eingegossen ist. Zum Schutz gegen einen direkten äußeren Eintritt von Feuchtigkeit in diesen Entlüftungskanal 3.2 ist an die randseitig auf der Bürstenhalterung 3 aufgebrachte eine axiale Dichtungsauflage 3.1 ein Dachteil 3.11 einstückig angeformt, der die Austrittsöffnung des Entlüftungskanal 3.2 zur offenen axialen und radialen Motorseite abdeckt. Zum weiteren Schutz gegen ein Eindringen von Feuchtigkeit in das Innere des Motorgehäuses 1 ist das radial innere Ende des Entlüftungskanals 3.2 zum Inneren des Motorgehäuses 1 hin durch eine Membran-Dichtung 3.3 verschlossen, die einerseits eine Entlüftung vom Inneren des Motorgehäuses 1 nach außen zuläßt jedoch ein Eindringen von Feuchtigkeit von außen in das Innere des Motorgehäuses 1 hindert.

Nach einer weiteren Ausgestaltung der Erfindung ist ein am axial äußeren Ende der Rotorwelle 2 vorgesehener Exzenter 2.11 zum Antrieb der Pumpenstößel in dem Pumpengehäuse 4 von einem Lager, insbesondere einem Nadellager 7, umgriffen, das - wie insbesondere aus FIG 5 ersichtlich - axial an dem motorgehäuseseitig vorgelagerten, für die zentrierte Lagerung des Rotorwellenendes 2.1 in dem Pumpengehäuse 4 vorgesehenen A-seitigen Rotorwellenlager 6 axial abgestützt ist.

## Patentansprüche

1. Motor-Pumpen-Aggregat, insbesondere für einen ABS-Antrieb, mit stirnseitig gegeneinanderliegendem Motorgehäuse (1) eines Kommutatormotors einerseits und einem Pumpengehäuse (4) andererseits und mit einem in das Pumpengehäuse (4) ragenden Rotorwellenende (2.1) mit den Merkmalen:
a) Das topfförmig ausgebildete Motorgehäuse (1) liegt mit seinem Topfrand (1.3) unter Zwischenlage einer, insbesondere plattenförmig ausgebildeten, A-seitigen Bürstenhalterung (3) dichtend gegen das Pumpengehäuse (4) an;
b) zur Dichtung zwischen dem Topfrand (1.3) des Motorgehäuses (1) und dem Pumpengehäuse (4) ist die Bürstenhalterung (3) zumindest randseitig an ihren beiden Stirnseiten mit einer elastischen Dichtungsauflage (3.1) versehen;
c) das Rotorwellenende (2.1) ist A-seitig über ein im Festsitz aufgestecktes Rotorwellenlager (6) unmittelbar in einer Lageraufnahme (4.1) des Pumpengehäuses (4) zu diesem zentriert gelagert;
d) das Rotorwellenende (2.1) ist über das A-seitig aufgesteckte Rotorwellenlager (6) in Richtung der B-Seite der Rotorwelle (2) gegen die Bürstenhalterung (3) axial abgestützt.

2. Motor-Pumpen-Aggregat nach dem vorhersehenden Anspruch mit dem Merkmal:
e) Das Motorgehäuse (1) ist über die an diesem befestigte, insbesondere axial verrastete, Bürstenhalterung (3) an dem A-seitigen Rotorwellenlager (6) radial abgestützt.

3. Motor-Pumpen-Aggregat nach zumindest einem der vorhergehenden Ansprüche mit dem Merkmal:
f) Der Kommutatormotor ist als vormontierbare Bauteileinheit mit axial an der offenen Motorgehäuseseite befestigter Bürstenhalterung (3) ausgebildet und mit dem axial außen vor der Bürstenhalterung (3) auf das Rotorwellenende (2.1) im Festsitz aufgesetztem A-seitigen Rotorwellenlager (6) zentriert zu dem Pumpengehäuse (4) in dessen Lageraufnahme (4.1) axial einsteckbar.

4. Motor-Pumpen-Aggregat nach zumindest einem der vorhergehenden Ansprüche mit dem Merkmal:
g) Die Bürstenhalterung (3) ist im Sinne einer unmittelbaren radialen Abstützung zwischen dem Motorgehäuse (1) und dem A-seitigen Rotorwellenlager (6) ohne radiale Berührung zu dem Rotorwellenende (2.1) mit dem A-seitigen Lager (6) kraft- und/oder formschlüssig verbunden.

5. Motor-Pumpen-Aggregat nach zumindest einem der vorhergehenden Ansprüche 1-3 mit dem Merkmal:
h) Die Bürstenhalterung (3) liegt im Sinne einer mittelbaren radialen Abstützung zwischen dem Motorgehäuse (1) und dem A-seitigen Rotorwellenlager (6) ohne kraft- und/oder formschlüssige Verbindung zu dem A-seitigen Rotorwellenlager (6) radial an dem Rotorwellenende (2.1) an.

6. Motor-Pumpen-Aggregat nach Anspruch 5 mit dem Merkmal:
i) Die Bürstenhalterung (3) liegt mit einem schneidenförmigen Anlagerand (3.5) radial abstützend und dichtend gegen den Umfang des Rotorwellenendes (2.1) an.

7. Motor-Pumpen-Aggregat nach zumindest einem der vorhergehenden Ansprüche mit dem Merkmal:
j) Die Bürstenhalterung (3) besteht aus einem Kunststoffgrundkörper mit inneren, insbesondere in Form eines Stanzgitters (8), eingespritzten elektrischen Leitungsverbindungen und mit äußeren anlagerandseitigen, insbesondere auf den Kunstscoffgrundkörper aufgespritzten, elastischen Dichtungsauflagen (3.1).

8. Motor-Pumpen-Aggregat nach zumindest einem der vorhergehenden Ansprüche mit dem Merkmal:
k) An die Bürstenhalterung (3) ist eine in eine, insbesondere axial verlaufende, Kontaktierungsröhre (4.2) des Pumpengehäuses (4) reichende Kontaktierung (8.1), insbesondere Steck-Kontaktierung, für eine Gegenkontaktierung mit einer an der motorabgewandten Seite des Pumpengehäuses (4) angeordneten Steuereinheit angeformt.

9. Motor-Pumpen-Aggregat nach zumindest einem der vorhergehenden Ansprüche mit dem Merkmal:
l) Die dichtend zwischen den voreinander liegenden Teilen des Motorgehäuses (1) einerseits und des Pumpengehäuses (4) andererseits liegende Bürstenhalterung (3) ist mit einem von dem Inneren des Motorgehäuses (1) nach außen führenden Entlüftungskanal (3.2), insbesondere einem nach außen durch einen an die Dichtungsauflage (3.1) der Bürstenhalterung (3) angeformten Dachteil (3.11) und nach innen durch eine Membran-Dichtung (3.3) gegen das Eindringen von äußerer Feuchtigkeit geschützten, radial innerhalb des Grundkörpers der Bürstenhalterung (3) verlaufenden, Entlüftungskanal (3.2) versehen.

10. Motor-Pumpen-Aggregat nach zumindest einem der vorhergehenden Ansprüche mit dem Merkmal:
m) Das in das Pumpengehäuse (4) ragende Rotorwellenende (2.1) ist an seinem äußersten axialen Ende mit einem Exzenter (2.11) mit einem umgreifenden Lager (7), insbesondere Nadellager, versehen, das axial an dem motorgehäuseseitig vorgelagerten, für die zentrierte Lagerung des Rotorwellenendes (2.1) in dem Pumpengehäuse (4) vorgesehenen A-seitigen Lager (6) axial abgestützt ist.

## Claims

1. Motor-pump unit, in particular for an ABS drive, with a motor casing (1) of a commutator motor, on the one hand, and a pump casing (4), on the other, which rest against one another at their ends, and with a rotor-shaft end (2.1) projecting into the pump casing (4), having the following features:
a) The motor casing (1), which is of cup-shaped design, rests in sealing fashion against the pump casing (4) by its cup rim (1.3) via a drive-end brush holder (3), which is in particular in the form of a plate;
b) to provide a seal between the cup rim (1.3) of the motor casing (1) and the pump casing (4), the brush holder (3) is provided at both its ends with a flexible sealing facing (3.1), at least at the rim;
c) at the drive end, the rotor-shaft end (2.1) is mounted directly in a bearing seat (4.1) of the pump casing (4), and in a manner centred with respect to the latter, by way of a rotor-shaft bearing (6) mounted on it with an interference fit;
d) the rotor-shaft end (2.1) is supported axially against the brush holder (3) in the direction of the non-drive end of the rotor shaft (2) via the rotor-shaft bearing (6) mounted on the drive end.

2. Motor-pump unit according to the preceding claim with the following feature:
e) The motor casing (1) is supported radially on the drive-end rotor-shaft bearing (6) via the brush holder (3), which is attached to the said motor casing, in particular latched to it axially.

3. Motor-pump unit according to at least one of the preceding claims, having the following feature:
f) The commutator motor is designed as a pre-assemblable module with a brush holder (3) attached axially to the open motor-casing end and can be inserted axially and in a manner centred with respect to the pump casing (4) into the bearing seat (4.1) of the latter by means of the drive-end rotor-shaft bearing (6) mounted axially at the outside with an interference fit on the rotor-shaft end (2.1) in front of the brush holder (3).

4. Motor-pump unit according to at least one of the preceding claims, having the following feature:
g) To provide direct radial support between the motor casing (1) and the drive-end rotor-shaft bearing (6), the brush holder (3) is connected frictionally and/or positively to the drive-end bearing (6) without radial contact with the rotor-shaft end (2,1).

5. Motor-pump unit according to at least one of preceding Claims 1-3, having the following feature:
h) To produce indirect radial support between the motor casing (1) and the drive-end rotor-shaft bearing (6), the brush holder (3) rests radially on the rotor-shaft end (2.1) without a frictional and/or positive connection to the drive-end rotor-shaft bearing (6).

6. Motor-pump unit according to Claim 5, having the following feature:
i) The brush holder (3) rests in a radially supporting and sealing manner against the circumference of the rotor-shaft end (2.1) by means of a locating edge (3.5) in the form of a knife edge.

7. Motor-pump unit according to at least one of the preceding Claims, having the following feature:
j) The brush holder (3) comprises a plastic main body with inner moulded-in electrical line connections, in particular in the form of a stamped grid (8), and with outer flexible sealing facings (3.1) at the locating edge, which are in particular moulded onto the plastic main body.

8. Motor-pump unit according to at least one of the preceding claims, having the following feature:
k) A contacting means (8.1), in particular a plug-in contacting means, extending into an in particular axially extending contacting tube (4.2) of the pump casing (4) and intended for mating contact with a control unit arranged at the end of the pump casing (4) remote from the motor is moulded onto the brush holder (3).

9. Motor-pump unit according to at least one of the preceding claims, having the following feature:
l) The brush holder (3), which is situated in a sealing manner between those parts of the motor casing (1), on the one hand, and the pump casing (4), on the other, which are situated in front of one another is provided with a vent passage (3.2) leading from the interior of the motor casing (1) to the outside, in particular a vent passage (3.2) which is protected from the penetration of external moisture at the outside by a roof part (3.11) moulded onto the sealing facing (3.1) of the brush holder (3) and at the inside by a diaphragm seal (3.3) and extends radially within the main body of the brush holder (3).

10. Motor-pump unit according to at least one of the preceding claims, having the following feature:
m) The rotor-shaft end (2.1) projecting into the pump casing (4) is provided at its outermost axial end with an eccentric (2.11) with a surrounding bearing (7), in particular a needle bearing, which is supported axially on the drive-end bearing (6) which is situated in front of it with respect to the motor casing and is provided for the centred mounting of the rotor-shaft end (2.1) in the pump casing (4).

## Revendications

1. Groupe moto-pompe, notamment pour un dispositif d'entraînement ABS, comportant, selon une disposition en vis-à-vis, une carcasse (1) d'un moteur à collecteur d'une part et un corps de pompe (4) d'autre part, un bout (2.1) de l'arbre du rotor pénétrant dans le corps de pompe (4), et présentant les caractéristiques suivantes :
a) la carcasse (1) du moteur, en forme de pot, s'applique par son bord (1.3) d'une manière étanche au corps de pompe (4), avec interposition d'un porte-balais (3) situé côté A et agencé notamment sous la forme d'une plaque;
b) le porte-balais (3) comporte, au moins au bord sur ses deux faces frontales, un support élastique d'étanchéité (3.1) pour établir l'étanchéité entre le bord (1.3) de la carcasse (1) du moteur et le corps de pompe (4);
c) le bout (2.1) de l'arbre du rotor est supportée d'une manière centrée, côté A, par l'intermédiaire d'un palier (6) emmanché selon un ajustement serré, directement dans un logement de palier (4.1) du corps de pompe (4), et ce d'une manière centrée par rapport à ce dernier;
d) le bout (2.1) de l'arbre du rotor est axialement en appui contre le porte-balais (3), en direction du côté B de l'arbre (2) du rotor, par l'intermédiaire du palier (6) de l'arbre du rotor, qui est emmanché côté A.

2. Groupe moto-pompe suivant la revendication précédente, présentant la caractéristique suivante :
e) la carcasse (1) du moteur prend appui radialement contre le palier (6) de l'arbre du rotor, situé côté A, par l'intermédiaire d'un porte-balais (3), qui est fixé, et notamment est encliqueté axialement, sur la carcasse du moteur.

3. Groupe moto-pompe suivant au moins l'une des revendications précédentes, présentant la caractéristique suivante :
f) le moteur à collecteur est réalisé sous la forme d'une unité pré-assemblée avec le porte-balais (3) fixé axialement sur le côté ouvert de la carcasse du moteur et peut, par le palier (6) de l'arbre du rotor, qui est situé sur le côté A, être emmanché extérieurement du point de vue axial, selon un ajustement serré, sur le bout (2.1) de l'arbre du rotor, devant le porte-balais (3), en étant centré par rapport au corps de pompe (4), dans le logement de palier (4.1) de ce corps.

4. Groupe moto-pompe suivant au moins l'une des revendications précédentes, présentant la caractéristique suivante :
g) le porte-balais (3) est relié selon une liaison de force et/ou selon une liaison par formes complémentaires, au palier (6) situé côté A, en vue d'un appui radial direct entre la carcasse (1) du moteur et le palier (6) de l'arbre du rotor, situé côté A, sans contact radial avec le bout (2.1) de l'arbre du rotor.

5. Groupe moto-pompe suivant au moins l'une des revendications précédentes 1 à 3, présentant la caractéristique suivante :
h) le porte-balais (3) s'applique radialement contre le bout (2.1) d'arme du rotor en vue d'un appui radial indirect entre la carcasse (1) du moteur et le palier (6) de l'arbre du rotor, situé côté A, sans liaison de force et/ou par formes complémentaires avec le palier (6) de l'arbre du rotor, situé côté A.

6. Groupe moto-pompe suivant la revendication 5, présentant la caractéristique suivante :
i) le porte-balais (3) s'applique radialement par un bord d'application en forme d'arête (3.5) de manière à être radialement en appui, et ce d'une manière étanche contre le pourtour du bout (2.1) de l'arbre du rotor.

7. Groupe moto-pompe suivant au moins l'une des revendications précédentes, présentant la caractéristique suivante :
j) le porte-balais (3) est constitué d'une embase en matière plastique ayant des liaisons intérieures en forme de conducteurs électriques, moulées par injection, notamment sous la forme d'une grille estampée (8), et des supports extérieurs élastiques d'étanchéité (3.1), qui sont situés sur le bord d'application et sont formés notamment par moulage par injection sur l'embase en matière plastique.

8. Groupe moto-pompe suivant au moins l'une des revendications précédentes, présentant la caractéristique suivante :
k) sur le porte-balais (3) est formé par moulage un système de contact (8.1), qui s'étend dans un tube de contact (4.2), notamment disposé axialement, du corps de pompe (4), notamment un système de contact à enfichage, pour l'établissement d'un contact antagoniste avec une unité de commande disposée sur le côté, éloigné du moteur, du corps de pompe (4).

9. Groupe moto-pompe suivant au moins l'une des revendications précédentes, présentant la caractéristique suivante :
l) le porte-balais (3), qui est disposé d'une manière étanche entre les parties, qui sont situées en vis-à-vis, d'une part de la carcasse (1) du moteur et d'autre part du corps de pompe (4), est pourvu d'un canal de mise à l'atmosphère (3.2), qui s'étend vers l'extérieur à partir de l'intérieur de la carcasse (1) du moteur, notamment un canal de mise à l'atmosphère (3.2) qui est protégé en direction de l'extérieur par une partie de recouvrement (3.11) formée sur le support d'étanchéité (3.1) du porte-balais (3) et, vers l'intérieur, par un élément d'étanchéité en forme de membrane (3.3), vis-à-vis de la pénétration de l'humidité extérieure, et qui s'étend radialement à l'intérieur de l'embase du porte-balais (3).

10. Groupe moto-pompe suivant au moins l'une des revendications précédentes, présentant la caractéristique suivante :
m) le bout (2.1) de l'arbre du rotor, qui pénètre dans le corps de pompe (4), est pourvue à son extrémité axiale la plus extérieure, d'un excentrique (2.11) comportant un palier enveloppant (7), notamment un roulement à aiguilles, qui prend appui axialement sur le palier (6) situé côté A, qui est disposé en avant du côté de la carcasse du moteur et est prévu pour le montage centré du bout (2.1) de l'arbre du rotor dans le corps de pompe (4).
